# EUROPÄISCHE PATENTSCHRIFT

(11) **EP 0 921 187 B1**
(45) Veröffentlichungstag und Bekanntmachung des Hinweises auf die Patenterteilung: **12.02.2003**
(21) Anmeldenummer: 98121822.5
(22) Anmeldetag: 17.11.1998
(51) Int. Cl.: C11D 1/74, C11D 3/395, C11D 3/48, C11D 1/83, C11D 1/14

(54) **Wasch-, Reiningungs- und Desinfektionsmittel enthaltend Chlor-aktive Substanzen und Fettsäurealkylesterethoxylate**
Washing, cleaning and disinfecting agents containing chlorine-active substances and fatty acid alkyl ester ethoxylates
Agents de lavage, de nettoyage et désinfectants contenant des substances actives chlorées et des éthoxylates d'esters d'acides gras

(30) Priorität: 02.12.1997 DE 19753316
(43) Veröffentlichungstag der Anmeldung: 09.06.1999
(73) Patentinhaber: Clariant GmbH, 65929 Frankfurt am Main (DE)
(72) Erfinder: Littau, Cheryl Ann Dr., 65835 Liederbach (DE); Wimmer, Ignaz, 84543 Winhöring (DE)

(56) Entgegenhaltungen:
- DE-A- 19 514 413
- US-A- 4 188 305
- LITTAU C ET AL: "OPTIMIZATION OF SURFACTANT SYSTEMS CONTAINING METHYL ESTER ETHOXYLATES" SOFW-JOURNAL SEIFEN, OELE, FETTE, WACHSE, Bd. 124, Nr. 11, 1. Oktober 1998 (1998-10-01), Seite 690, 692, 694, 69 XP000778430 ISSN: 0942-7694
- "METHYL ESTER ETHOXYLATES" JOURNAL OF THE AMERICAN OIL CHEMISTS' SOCIETY, Bd. 74, Nr. 7, 1. Juli 1997 (1997-07-01), Seiten 847-859, XP000659303 ISSN: 0003-021X

## Beschreibung

In Amerika, Japan und anderen Regionen, wo die Waschmaschinen im allgemeinen keine aktiven Heizsysteme besitzen, wird mit chloraktiven Substanzen, insbesondere mit Natriumhypochlorit gebleicht und desinfiziert. Die Natriumhypochloritlösung entfaltet ihre volle Bleichwirkung schon bei 20°C. Als Oxidationsmittel kann dabei einerseits die hypochlorige Säure und ihr Anion, andererseits der beim Zerfall der Säure entstehende atomare Sauerstoff wirken. Von Nachteil ist, daß Natriumhypochloritlösungen mit vielen anderen Waschmittelinhaltsstoffen unverträglich sind, so daß das Bleichmittel getrennt dosiert werden muß.

Dies gilt insbesondere für nichtionische Tenside. So werden beispielsweise die Hydroxylgruppen von Fettalkoholoxethylaten bereits bei Temperaturen von 40°C und darüber innerhalb kurzer Zeit in Gegenwart von Hypochlorit oxidiert.

Die Patentschrift EP 636690 beschreibt ein gelförmiges Reinigungsmittel enthaltend Hypochlorit und ein Acrylpolymer zur Stabilisierung der Tenside. Die Stabilisierung von Hypochlorit enthaltenden Reinigungsmitteln durch wasserlösliche Sulfo-Polymere wird in GB-A-227119 beschrieben.

Die Aufgabe der Erfindung bestand darin, gegenüber Hypochlorit stabile nichtionische Tenside mit guter biologischer Abbaubarkeit und guter Hautverträglichkeit bereitzustellen. Diese Aufgabe wird gelöst durch die Verwendung der im folgenden beschriebenen Fettsäurealkylesterethoxylate.

Gegenstand der Erfindung sind Wasch-, Reinigungs- und Desinfektionsmittel, die neben der Chlor-aktiven Substanz ein Fettsäurealkylesterethoxylat der Formel

RO(CH₂CH₂O)ₙCOR¹

enthalten, wobei R C₁-C₄-Alkyl, R¹ C₅-C₂₂-Alkyl oder C₅-C₂₂-Alkenyl und n eine Zahl von 1 bis 30 bedeutet.

Diese Fettsäurealkylesterethoxylate werden nach bekannten Verfahren hergestellt durch Umsetzung von Ethylenoxid und dem Fettsäureester in Gegenwart eines Katalysators (US-A-4 022 808; DE-A-9151080, DE-A-30 08 174; EP-A-335 295; US-A-5 374 750). Als Fettsäurealkylester sind bevorzugt die Methylester, bei den zugrundeliegenden Fettsäuren sind gesättigte und ungesättigte C₁₂-C₁₈-Fettsäuren bevorzugt, insbesondere die natürlich vorkommenden Fettsäuren oder Fettsäuregemische wie Laurin-, Stearin-, Oleinsäure, Talgfettsäure oder Cocosfettsäure.

Die erfindungsgemäßen Wasch-, Reinigungs- und Desinfektionsmittel, die fest oder flüssig sein können, enthalten im allgemeinen 0,1 bis 15, vorzugsweise 0,2 bis 10, insbesondere 2 bis 6 Gew.-% der Chlor-aktiven Substanz. Die wichtigste dieser Chlor-aktiven Substanzen sind die Hypochlorite, insbesondere Natriumhypochlorit. Andere Chlor-aktiven Substanzen sind Dichlorisocyanurate, Trichlorcyanursäure, N-chlorierte Succinimide, -Malonimide, -Phthalimide, oder -Naphthalimide, Dichlordimethylhydantoin, N-Chlorsulfonamid und Chloramine. Die Menge an Fettsäurealkylesterethoxylat in den erfindungsgemäßen Wasch-, Reinigungs- und Desinfektionsmitteln beträgt 0,2 bis 20, bevorzugt 0,5 bis 10, insbesondere 0,3 bis 5 Gew.-%. Es hat sich als vorteilhaft erwiesen, die Fettsäurealkylesterethoxylate zusammen mit sekundären Alkansulfonaten (SAS) einzusetzen. Durch diese Kombination läßt sich die Stabilität des Hypochlorit-Tensid-Systems noch verbessern. Diese sek. Alkansulfonate werden in solchen Mengen eingesetzt, daß das Gewichtsverhältnis Fettsäurealkylesterethoxylat zu Alkansulfonat 4:1 bis 1:4, vorzugsweise 2:1 bis 1:2, insbesondere 1:1 beträgt.

Die erfindungsgemäßen Wasch-, Reinigungs- und Desinfektionsmittel können je nach Einsatzzweck darüberhinaus noch andere anionische, nichtionische, kationische und/oder amphotere Co-Tenside enthalten, vorausgesetzt, diese Co-Tenside werden nicht von der Chlor-aktiven Substanz angegriffen.

Typische Beispiele für solche Co-Tenside sind Aminoxide, Betaine, Sarcosinate, Taurate, Alkylsulfate, Alkylsulfonate, Alkylarylsulfonate, Alkylphenolethersulfate, Phosphorsäurealkylester, Sulfoxide, Phosphoroxide, Alkyldiphenyloxidsulfonate, Seifen.

Bei den erfindungsgemäßen Wasch-, Reinigungs- und Desinfektionsmitteln handelt es sich beispielsweise um Waschmittel, Desinfektionsmittel, desinfizierende Reinigungsmittel, Allzweckreiniger, Sanitärreiniger, Badreiniger, Maschinengespirrspülmittel. Sie können je nach Anwendungszweck neben den genannten Tensiden noch die jeweils spezifischen Hilfs- und Zusatzstoffe beispielsweise Gerüststoffe, Schauminhibitoren, Salze, Bleichmittel, Bleichaktivatoren, optische Aufheller, Vergrauungsinhibitoren, Lösungsvermittler, Enzyme, Verdickungsmittel, Konservierungsmittel, Duft- und Farbstoffe, Perglanzmittel, Emulgatoren, Überfettungsmittel, biogene Wirkstoffe (Pflanzenextrakte und Vitaminkomplexe), Sequestriermittel enthalten.

### Beispiele

Beispiel 1: Reiniger mit Natriumhypochlorit, klar, flüssig

| | |
|---|---|
| Zusammensetzung (Gew.-%) | 100 % |
| E-Wasser | ad 100 % |
| Fettsäurealkylesterethoxylat (Clariant) | 0,90 |
| Hostapur® SAS 30 (Clariant) | 1,50 |
| Natriumhydroxid | 1,00 |
| Natriumhypochlorit (15 %ig) | 3,75 |
| Parfumöl | |

### Beispiel 2

Sanitär-Reiniger mit Natriumhypochlorit, trüb, flüssig

| | |
|---|---|
| Zusammensetzung (Gew.-%) | 100 % |
| E-Wasser | ad 100 % |
| Fettsäurealkylesterethoxylat (Clariant) | 1.00 |
| Hostapur SAS 30 (Clariant) | 0.75 |
| Natriumhydroxid | 1.00 |
| Natriumhypochlorit (15 %ig) | 7.50 |

### Herstellung:

Die Komponenten werden der angegebenen Reihenfolge nach gut zusammengerührt.

### Chemische Bezeichnung der Handelsprodukte:

Hostapur SAS 30: sekundäres C₁₃-C₁₇-Alkansulfonat, Natriumsalz
Fettsäurealkylesterethoxylat: C₆-C₁₀-Alkylfettsäuremethylesterethoxylat mit 9 mol EO
Bestimmung der Stabilität von Natriumhypochlorit in Kombination mit Tensiden

Nach der Methode ASTM D2022 wurde der Chloridgehalt einer wäßrigen Lösung enthaltend 1 % Tensid, 4,5 % NaClO₄, 0,3 % NaOH gemessen. Die Proben wurden bei 40°C gelagert und der Chloridgehalt wurde jeweils nach 10, 20, 30 und 70 Tagen gemessen. Die Ergebnisse sind in folgender Tabelle zusammengestellt.

| Tensid | | | | | |
|---|---|---|---|---|---|
| Tage | 1 | 2 | 3 | 4 | 5 |
| 10 | 68 | 88 | 92 | 88 | 95 |
| 20 | 0 | 72 | 80 | 80 | 80 |
| 30 | 0 | 60 | 70 | 73 | 72 |
| 70 | 0 | 0 | 0 | 60 | 58 |

Es wurden folgende Tenside bzw. Tensidmischungen geprüft:
1. C₁₁-Oxoalkoholpolyglykolether mit 7 mol EO
2. C₆/C₁₀-Alkylfettsäuremethylesterethoxylat mit 9 mol EO
3. C₁₂/C₁₄-Alkylfettsäuremethylesterethoxylat mit 12,5 mol EO
4. sek. Alkansulfonat, Na-Salz
5. Mischung 1:1 aus C₆/C₁₀-Alkylfettsäuremethylesterethoxylat mit 9 mol EO und sek. Alkansulfonat

Die in der Tabelle angegebenen Zahlen bezeichnen den Aktivchlorgehalt in %, bezogen auf den Anfangswert.

Diese Tabelle zeigt, daß das Fettsäuremethylesterethoxylat allein oder zusammen mit einem sek. Alkansulfonat eine ausreichend lange Stabilität in Mischung mit Hypochlorit gewährleistet.

## Patentansprüche

1. Wasch-, Reinigungs- und Desinfektionsmittel, enthaltend eine chloraktive Substanz, **dadurch gekennzeichnet, daß** sie ein Fettsäurealkylesterethoxylat der Formel
RO(CH₂CH₂O)ₙCOR¹
enthalten, wobei R C₁-C₄-Alkyl, R¹ C₅-C₂₂-Alkyl oder C₅-C₂₂-Alkenyl und n eine Zahl von 1 bis 30 bedeutet.

2. Wasch-, Reinigungs- und Desinfektionsmittel nach Anspruch 1, **dadurch gekennzeichnet, daß** sie 0,2 bis 20, vorzugsweise 0,5 bis 10 Gew.-% des Fettsäurealkyletherethoxylats enthalten.

3. Wasch-, Reinigungs- und Desinfektionsmittel nach Anspruch 1, **dadurch gekennzeichnet, daß** sie eine Mischung aus Fettsäurealkyletherethoxylat und sekundärem Alkansulfonat enthalten.

## Claims

1. A washing, cleaning or disinfecting agent comprising a chlorine-active substance and a fatty acid alkyl ester ethoxylate of the formula
RO(CH₂CH₂O)ₙCOR¹
in which R is C₁-C₄-alkyl, R¹ is C₅-C₂₂-alkyl or C₅-C₂₂-alkenyl, and n is a number from 1 to 30.

2. A washing, cleaning or disinfecting agent as claimed in claim 1, which comprises from 0.2 to 20% by weight, preferably from 0.5 to 10% by weight, of the fatty acid alkyl ester ethoxylate.

3. A washing, cleaning or disinfecting agent as claimed in claim 1, which comprises a mixture of fatty acid alkyl ester ethoxylate and secondary alkanesulfonate.

## Revendications

1. Agents de lavage, de nettoyage et de désinfection contenant une substance active chlorée, **caractérisés en ce qu'**ils contiennent un éthoxylate d'ester alkylique d'acides gras de formule
**RO(CH**_{**2**}**CH**_{**2**}**O)**_{**n**}**COR**^{**1**}**,**
dans laquelle R représente un groupe alkyle en C₁ à C₄, R¹ représente un groupe alkyle en C₅ à C₂₂ ou alcényle en C₅ à C₂₂ et n est un nombre de 1 à 30.

2. Agents de lavage, de nettoyage et de désinfection selon la revendication 1, **caractérisés en ce qu'**ils contiennent de 0,2 à 20, de préférence de 0,5 à 10 % en poids de l'éthoxylate d'ester alkylique d'acides gras.

3. Agents de lavage, de nettoyage et de désinfection selon la revendication 1, **caractérisés en ce qu'**ils contiennent un mélange d'éthoxylate d'ester alkylique d'acides gras et d'alcanesulfonate secondaire.
